# EUROPEAN PATENT SPECIFICATION

(11) **EP 2 992 943 B1**
(45) Date of publication and mention of the grant of the patent: **06.10.2021**
(21) Application number: 15179962.4
(22) Date of filing: 06.08.2015
(51) Int. Cl.: B01D 46/00, B01D 46/44

(54) **A DUST FILTRATION SYSTEM OF GAS MIXTURE OF HIGH TEMPERATURE OIL GAS, WATER VAPOR AND PRECIPITATION-PRONE CARBIDES**
STAUBFILTRATIONSSYSTEM EINES GASGEMISCHES AUS HOCHTEMPERATURÖLGAS, WASSERDAMPF UND NIEDERSCHLAGSANFÄLLIGEM CARBIDEN
SYSTÈME DE FILTRATION DE LA POUSSIÈRE DE MÉLANGE GAZEUX DE GAZ DE PÉTROLE À HAUTE TEMPÉRATURE, DE VAPEUR D'EAU ET DE CARBURES PRÉCIPITATION-PRONE

(30) Priority: 14.08.2014 CN 201410398944
(43) Date of publication of application: 09.03.2016
(73) Proprietor: Henan Dragon into Coal Technology Co., Ltd, Xixia Nanyang Henan 474500 (CN)
(72) Inventor: Zhu, Shucheng, 474500 Xixia Nanyang (CN)
(74) Representative: Schultheiss & Sterzel Patentanwälte PartG mbB

(56) References cited:
- CN-A- 103 644 014
- US-A- 2 661 811
- US-A- 5 085 049
- US-A- 6 077 490
- None

## Description

### FIELD OF THE INVENTION

The present invention relates to gas dust removal in coal chemical industry. More specifically, it relates to a dust filtration system of gas mixture of high temperature oil gas, water vapor and precipitation-prone carbides and a method for regenerating the dust filtration system.

### BACKGROUND OF THE INVENTION

High-temperature dusty gas is often generated in chemical, petroleum, metallurgy and other industries, particularly in the pyrolysis of low rank coal with tar gas generated and other gas decomposed in order to improve coal quality. Coal turns and rolls, resulting in high dust content in the gas mixture, and the gaseous precipitation-prone carbides in the mixed gas such as tar coke and bituminous substances can only exist in the high temperature environment and tend to precipitate slowly from the mixed gas due to low temperature or environmental change. Precipitation-prone carbides such as tar coke and bituminous substances accumulate in the filter pores and cake. The appropriate filter cake can lead to better gas filtering effect, but once precipitation-prone carbides accumulate too much, they can clog the filter pores, while the filter cake will gradually thicken and lose its filtering capacity so that production can not continue. Even with continuous high temperature in the filter chamber, in the filtration process of the gas mixture with high dust content, due to the relationship between molecular liquefaction, solidification, exposure to environment and temperature change, precipitation-prone carbides such as tar coke and bituminous substances can still gradually precipitate at the position in frequent physical contact with the filter from the mixed gas, accumulate in the filter pores and make the filter cake thicken gradually and lost its filtering capacity. The replacement of filter inevitably leads to shutdown, and for large chemical devices in continuous operation, the shutdown and troubleshooting inevitably cause huge economic losses. For a long time, both at home and abroad, the problem of dust filtration of gas mixture of high temperature oil gas, water vapor and precipitation-prone carbide, in particular the dedusting problem of mixed oil gas with high dust content has not been effectively addressed, and the industrialized production can not be achieved, which directly affects the world's current overall pattern of coal industry so that the huge amount of low rank coal can not be quickly and efficiently utilized.

The documents CN 103 644 014 A, US 5,085,049 A, US 6,077,490 A and US 2,661,811 A disclose prior art dust filter systems.

### SUMMARY OF THE INVENTION

The present invention to solve the above problems in the process proposed a dust filtration system of gas mixture of high temperature oil gas, water vapor and precipitation-prone carbides that has a simple structure and outstanding effect.

A dust filtration system of gas mixture of high temperature oil gas, water vapor and precipitation-prone carbides that has a simple structure and outstanding effect comprises a closed separation chamber connecting intake duct and exhaust duct, the said closed separation chamber comprises a filter mechanism inside, the outer surface of the said filter mechanism connects to the intake duct and the inner surface connects to the exhaust duct, and the said dust filtration system comprises a filter regeneration mechanism having all the features of claim 4. A method for regenerating a dust filtration system according to claim 1 is also proposed.

The said filter regeneration mechanism is a control component for the intake and exhaust of regenerated substances.

Between the said intake duct and the said exhaust duct, there are multiple closed separation chambers, and the said multiple separation chambers connect to the said intake duct through the intake branch and connect to the said exhaust duct through the exhaust branch.

The said intake branch has a valve inside.

The said intake branch and exhaust duct have preferably a temperature monitoring component inside.

The said filter regeneration mechanism is a physical contact cleaning and brushing component.

The said filter regeneration mechanism comprised a physical contact cleaning and brushing component and a regenerated gas intake and exhaust control component.

The present invention includes a filter regeneration mechanism set in the closed separation chamber connecting intake duct and exhaust duct, which can preferably recover the filtering capacity greatly decreased due to the adhesion of tar and ash to the filter surface and pores. The repeated regeneration directly reduces the cost of filter and greatly improves its service life. As the intake and exhaust control component slowly pushes regenerated substances through the closed separation chamber, the tar and ash at high temperature contact a small amount of oxygen, carbon dioxide or water vapor for a chemical reaction, in which the carbides react for a long time in the form of incomplete combustion and the product was pushed by the intake and exhaust control component away from the filter surface and pores to achieve the regeneration of its filtering capability. Between the said intake duct and the said exhaust duct, there are multiple closed separation chambers, which can work in parallel in the case of a large amount of mixed gas in the intake duct to improve the speed of solid-gas separation. After the regeneration process ends in the closed separation chamber with reduced filtering capacity, the dust removal system is started. The said intake branch has a valve inside that can easily switch the work state and regeneration state of any enclosed separation chamber so that the whole solid-gas separation system is always in a cyclic state of normal operation, ceaseless product and regeneration. The said intake branch and exhaust branch have preferably a temperature monitoring component inside. The increasing temperature indicates high flow velocity and reaction speed of regenerated substances, whose content and flow velocity should be reduced; the decreasing temperature indicates low velocity of regenerated substances, whose content and flow velocity should be promoted. The temperature monitoring component is used for regeneration process control. The said filter regeneration mechanism is a physical contact and brushing component, that is, the filter surface-cleaning mechanism set in the filtration chamber can more quickly brush away the too thick filter cake on the filter surface, quickly recovering the filter capability. The said regeneration mechanism comprised a physical contact cleaning and brushing component and a regenerated gas intake and exhaust control component so that the surface thick filter cake can be cleaned, while the filter surface and pores can be cleaned by the chemical reaction. The joint action not only reduces the regeneration time but also greatly enhances the degree of regeneration so that the attachments to the filter surface and pores can be cleaned more thoroughly.

### BRIEF DESCRIPTION OF THE DRAWINGS

The present invention is further described in combination with the drawings:
FIG. 1 is a structure diagram of Embodiment A of the present invention;
FIG. 2 is a structure diagram of Embodiment B of the present invention;
FIG. 3 is a structure diagram of Embodiment C of the present invention;
FIG. 4 is a structure diagram of Embodiment D of the present invention.

### DETAILED DESCRIPTION OF THE INVENTION

### Embodiment 1

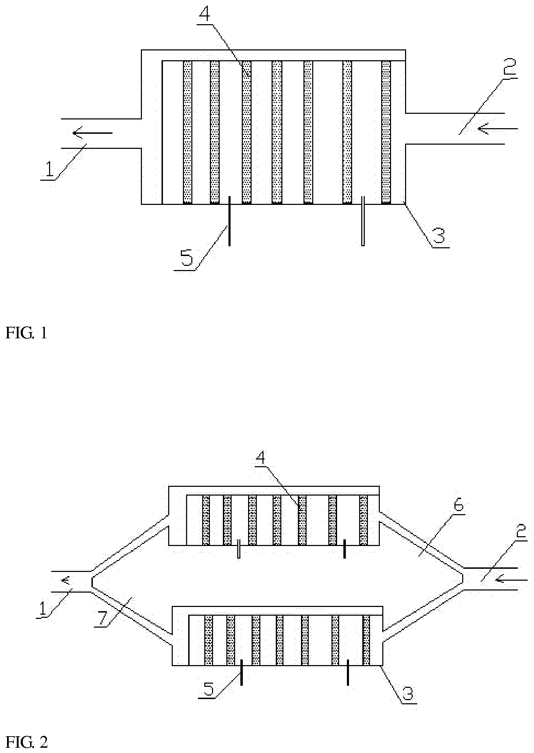

As shown in FIG. 1, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a control component for the intake and exhaust of regenerated substances. For example, the control component for the intake and exhaust of oxygen-containing gas or mixed gas of carbon dioxide and water vapor can control the effective gas content 3-11%. In the closed separation chamber 3 between the said intake duct 2 and the said exhaust duct 1, the filter regeneration mechanism 5 is set. After the filter works for a time, if the capacity of filter 4 reduces greatly due to the tar and coal ash filter adhering to the surface and pores and can not meet the normal working time, the regeneration mechanism works to recover the filter capacity to the proper level and the repeated regeneration directly reduces the filter cost and greatly improves its service life. As the intake and exhaust control component 5 slowly pushes regenerated substances, the tar and ash at high temperature contact a small amount of oxygen, carbon dioxide or water vapor for a chemical reaction, in which the carbides react for a long time in the form of incomplete combustion and the product was pushed by the intake and exhaust control component away from the filter surface and pores to achieve the regeneration of its filtering capability.

### Embodiment 2

As shown in FIG. 2, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a control component for the intake and exhaust of regenerated substances. For example, the control component for the intake and exhaust of oxygen-containing gas or mixed gas of carbon dioxide and water vapor can control the effective gas content 3-11%. Between the said intake duct 2 and the said exhaust duct 1, there are multiple closed separation chambers 3, and the said multiple separation chambers 3 connect to the said intake duct 2 through the intake branch 6 and connect to the said exhaust duct 1 through the exhaust branch 7. The said intake branch has a temperature monitoring component inside. The said multiple separation chambers connect to the said intake duct through the intake branch and connect to the said exhaust duct through the exhaust branch. The multiple closed separation chambers can work in parallel in the case of a large amount of mixed gas in the intake duct to improve the speed of solid-gas separation. More importantly, in the case of coexisting closed separation chambers, if one of them has decreased filter capacity, the overall system need not stop working. As the filter capacity decreased to a certain range, the separation chamber stops working, enters the regeneration program and then enters the separation system.

### Embodiment 3

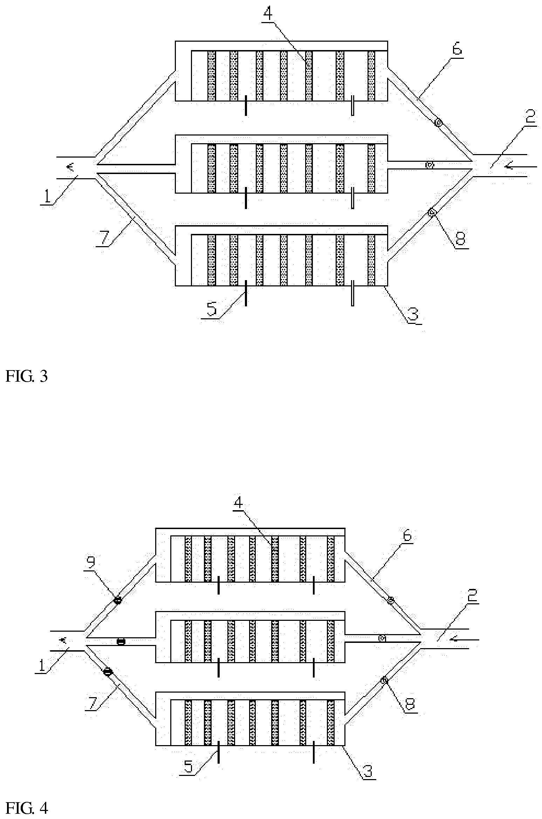

As shown in FIG. 3, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a control component for the intake and exhaust of regenerated substances. For example, the control component for the intake and exhaust of oxygen-containing gas or mixed gas of carbon dioxide and water vapor can control the effective gas content 5-11%. Between the said intake duct 2 and the said exhaust duct 1, there are multiple closed separation chambers 3, and the said multiple separation chambers 3 connect to the said intake duct 2 through the intake branch 6 and connect to the said exhaust duct 1 through the exhaust branch 7. The said intake branch 6 has a valve 8 inside, which can easily achieve the work state and regeneration state of any closed separation chamber 3 so that the whole solid-gas separation system is always in a cyclic state of normal operation, ceaseless product and regeneration.

### Embodiment 4

As shown in FIG. 4, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a control component for the intake and exhaust of regenerated substances. For example, the control component for the intake and exhaust of oxygen-containing gas or mixed gas of carbon dioxide and water vapor can control 3-5% of oxygen. Between the said intake duct 2 and the said exhaust duct 1, there are multiple closed separation chambers 3, and the said multiple separation chambers 3 connect to the said intake duct 2 through the intake branch 6 and connect to the said exhaust duct 1 through the exhaust branch 7. The said intake branch 6 has a valve 8 inside. The said exhaust branch 7 has a valve 9 inside.

### Embodiment 5

As shown in FIG. 3, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a physical contact cleaning and brushing component, such as the automatic dedusting brush made of heat-resisting bristles.

### Embodiment 6

As shown in FIG. 3, a dust filtration system of gas mixture of high temperature oil gas, water vapor and precipitation-prone carbides, comprising a closed separation chamber 3 connecting intake duct 2 and exhaust duct 1, the said closed separation chamber 3 comprises a filter mechanism 4 inside, the outer surface of the said filter mechanism 4 connects to the intake duct 2 and the inner surface connects to the exhaust duct 1, and the said closed filter chamber 3 comprises a filter regeneration mechanism 5. The said filter regeneration mechanism is a physical contact cleaning and brushing component, such as the combination of the automatic dedusting brush made of heat-resisting bristles with the regenerated gas intake and exhaust control component. After the dedusting lasts for a time and stops working, the generated gas intake and exhaust control component is started. For example, the control component for the intake and exhaust of oxygen-containing gas or mixed gas of carbon dioxide and water vapor can control 5-11% of effective gas. The chemical reaction can clean the filter surface and the joint action reduces the regeneration time but also greatly enhances their regeneration degree so that the cleaning of attachments to the filter surface and pores can be cleaned more thoroughly.

## Claims

1. A method for regenerating a dust filtration system of gas mixture of high temperature oil gas, water vapor and precipitation-prone carbides comprising:
providing a closed separation chamber (3) connecting intake duct (2) and exhaust duct (1), wherein the closed separation chamber (3) comprises a filter mechanism (4) inside, the outer surface of the filter mechanism (4) connects to the intake duct (2) and the inner surface connects to the exhaust duct (1), and
providing a filter regeneration mechanism, wherein the filter regeneration mechanism (5) comprises a physical contact cleaning and brushing component and a intake and exhaust regenerated gas control component, wherein the intake and exhaust regenerated gas control component is a control component for the intake and exhaust of oxygen-containing gas.

2. The method of claim 1, wherein the oxygen content of the oxygen-containing gas is 3-11%.

3. The method of claim 2, wherein the oxygen content of the oxygen-containing gas is 3-5%.

4. A dust filtration system of gas mixture of high temperature oil gas, water vapor and precipitation-prone carbides for performing the method of any of claims 1 to 3 comprising:
a closed separation chamber (3) connecting intake duct (2) and exhaust duct (1), wherein the closed separation chamber (3) comprises a filter mechanism (4) inside, the outer surface of the filter mechanism (4) connects to the intake duct (2) and the inner surface connects to the exhaust duct (1), the dust filtration system comprises a filter regeneration mechanism, and wherein the filter regeneration mechanism (5) comprises a physical contact cleaning and brushing component and a intake and exhaust regenerated gas control component, wherein between the intake duct (2) and the exhaust duct (1) there are multiple closed separation chambers (3), and the multiple separation chambers (3) connect to the intake duct (2) through the intake branch (6) and connect to the exhaust duct (1) through the exhaust branch (7), wherein the intake branch (6) has a valve (8) inside.

5. The dust filtration system according to claim 4, wherein the intake branch (6) and exhaust duct (1) have a temperature monitoring component inside.

## Patentansprüche

1. Verfahren zum Regenerieren eines Staubfiltrationssystems für ein Gasgemisch aus Hochtemperatur-Ölgas, Wasserdampf und zu Ausfällungen neigenden Karbiden, umfassend:
Bereitstellen einer geschlossenen Trennkammer (3), die einen Einlasskanal (2) und einen Auslasskanal (1) verbindet, wobei die geschlossene Trennkammer (3) im Inneren einen Filtermechanismus (4) umfasst, wobei die Außenoberfläche des Filtermechanismus (4) mit dem Einlasskanal (2) verbunden ist und die Innenoberfläche mit dem Auslasskanal (1) verbunden ist, und
Bereitstellen eines Filterregenerierungsmechanismus, wobei der Filterregenerationsmechanismus (5) eine physikalische Kontaktreinigungs- und Bürstenkomponente und eine Einlass- und Auslassregenerationsgas-Steuerkomponente umfasst, wobei die Einlass- und Auslassregenerationsgas-Steuerkomponente eine Steuerkomponente für den Einlass und Auslass von sauerstoffhaltigem Gas ist.

2. Verfahren nach Anspruch 1, wobei der Sauerstoffgehalt des sauerstoffhaltigen Gases 3-11% beträgt.

3. Verfahren nach Anspruch 2, wobei der Sauerstoffgehalt des sauerstoffhaltigen Gases 3-5% beträgt.

4. Staubfiltrationssystem für ein Gasgemisch aus Hochtemperatur-Ölgas, Wasserdampf und ausfällungsanfälligen Karbiden zur Durchführung des Verfahrens nach einem der Ansprüche 1 bis 3, umfassend:
eine geschlossene Trennkammer (3), die einen Einlasskanal (2) und einen Auslasskanal (1) verbindet, wobei die geschlossene Trennkammer (3) im Inneren einen Filtermechanismus (4) umfasst, die Außenoberfläche des Filtermechanismus (4) mit dem Einlasskanal (2) und die Innenoberfläche mit dem Auslasskanal (1) verbunden ist, das Staubfiltrationssystem einen Filterregenerierungsmechanismus umfasst, und wobei der Filterregenerierungsmechanismus (5) eine physikalische Kontaktreinigungs- und Bürstenkomponente und eine Einlass- und Auslassregenerierungsgaskontrollkomponente umfasst, wobei zwischen dem Einlasskanal (2) und dem Auslasskanal (1) mehrere geschlossene Trennkammern (3) vorhanden sind und die mehreren Trennkammern (3) mit dem Einlasskanal (2) durch die Einlassverzweigung (6) verbunden sind und mit dem Auslasskanal (1) durch die Auslassverzweigung (7) verbunden sind, wobei die Einlassverzweigung (6) innen ein Ventil (8) aufweist.

5. Staubfiltrationssystem nach Anspruch 4, wobei die Einlassverzweigung (6) und der Auslasskanal (1) im Inneren eine Temperaturüberwachungskomponente aufweisen.

## Revendications

1. Procédé de régénération d'un système de filtration de poussière d'un mélange gazeux de gaz de pétrole haute température, de vapeur d'eau et de carbures sujets à des précipitations, comprenant :
la mise en place d'une chambre de séparation (3) fermée reliant une conduite d'entrée (2) et une conduite de sortie (1), où la chambre de séparation (3) fermée comprend un mécanisme de filtre (4) à l'intérieur, la surface extérieure du mécanisme de filtre (4) se relie à la conduite d'entrée (2) et la surface intérieure se relie à la conduite de sortie (1), et
la mise en place d'un mécanisme de régénération de filtre, où le mécanisme de régénération de filtre (5) comprend un composant de nettoyage et de brossage à contact physique et un composant de commande du gaz régénéré d'entrée et de sortie, où le composant de commande du gaz régénéré d'entrée et de sortie est un composant de commande pour l'entrée et la sortie d'un gaz contenant de l'oxygène.

2. Procédé selon la revendication 1, dans lequel la teneur en oxygène du gaz contenant de l'oxygène est de 3 à 11 %.

3. Procédé selon la revendication 2, dans lequel la teneur en oxygène du gaz contenant de l'oxygène est de 3 à 5 %.

4. Système de filtration de poussière d'un mélange gazeux d'un gaz de pétrole haute température, de vapeur d'eau et de carbures sujets à des précipitations permettant de réaliser le procédé selon l'une quelconque des revendications 1 à 3, comprenant :
une chambre de séparation (3) fermée reliant une conduite d'entrée (2) et une conduite de sortie (1), où la chambre de séparation (3) fermée comprend un mécanisme de filtre (4) à l'intérieur, la surface extérieure du mécanisme de filtre (4) se relie à la conduite d'entrée (2) et la surface intérieure se relie à la conduite de sortie (1), le système de filtration de poussière comprend un mécanisme de régénération de filtre, et où le mécanisme de régénération de filtre (5) comprend un composant de nettoyage et de brossage à contact physique et un composant de commande du gaz régénéré d'entrée et de sortie, où, entre la conduite d'entrée (2) et la conduite de sortie (1), il y a de multiples chambres de séparation (3) fermées, et les multiples chambres de séparation (3) se relient à la conduite d'entrée (2) par la branche d'entrée (6) et se relient à la conduite de sortie (1) par la branche de sortie (7), où la branche d'entrée (6) possède une soupape (8) à l'intérieur.

5. Système de filtration de poussière selon la revendication 4, dans lequel la branche d'entrée (6) et la conduite de sortie (1) ont un composant de surveillance de la température à l'intérieur.
